# EUROPÄISCHE PATENTANMELDUNG

(11) **EP 3 101 360 A1**
(43) Veröffentlichungstag der Anmeldung: **07.12.2016**
(21) Anmeldenummer: 16172846.4
(22) Anmeldetag: 03.06.2016
(51) Int. Cl.: F24F 11/00, F24F 7/007

(54) **VORRICHTUNG ZUM LÜFTEN VON RÄUMEN**

(30) Priorität: 05.06.2015 AT 504602015
(71) Anmelder: Limot Elektromotorenbaugesellschaft m.b.H. & Co. KG, 4060 Leonding (AT)
(72) Erfinder: Weigl, Andreas, 4020 Linz (AT)
(74) Vertreter: Patentanwaltskanzlei Hübscher

(57) **Zusammenfassung**

Eine Vorrichtung zum Lüften von Räumen umfasst ein Lüftergehäuse (1), in dem eine von einem Elektromotor (2) angetriebene Gebläseanordnung (3) angeordnet ist, wobei der Druckseite (7) der Gebläseanordnung (3) ein Gebläsekanal (8) zugehört. Um gleichbleibende Lüftungsverhältnisse zu schaffen, wird vorgeschlagen, dass der Druckseite (7) der Gebläseanordnung (3) ein Strömungssensor () zugeordnet ist und dass dem Elektromotor () eine Drehzahlsteuerung () zugeordnet ist, welche den Elektromotor () im Sinne eines Erzielens von Zielströmungssensordaten ansteuert.

## Beschreibung

Die Erfindung bezieht sich auf eine Vorrichtung zum Lüften von Räumen, mit einem Lüftergehäuse, in dem eine von einem Elektromotor angetriebene Gebläseanordnung angeordnet ist, wobei der Druckseite der Gebläseanordnung ein Gebläsekanal zugehört, dem eine, zwischen einer Verschluss- und einer Offenstellung verlagerba-re, Rückschlagklappe zugeordnet ist

Derartige Vorrichtungen, sogenannte Lüftereinheiten, dienen insbesondere der Entlüftung von Gebäuderäumen (DE 296 23 226 U1, DE 20 015 136 U1). Es soll damit meist in Sanitärräumen, Küchen, Abstellräumen u.dgl. schadstoff-, feuchte- und geruchsbelastete Luft abgesaugt werden. Die Vorrichtung wird ist über eine Verbindungsleitung an ein vertikales Rohr, welches als zentrales Entlüftungsrohr dient und sich in einem Schacht befindet, angeschlossen. Dieses wird beispielsweise zu einer Entlüftungsöffnung im Dachbereich geführt. In vielen Fällen Blasen mehrere Lüftereinheiten in ein gemeinsames Entlüftungsrohr, womit es bei ausgeschalteten Einheiten zu Rückströmungen kommen kann. Um dies zu verhindern werden gasdichte Rückschlagklappen eingesetzt, die ein Rückströmen von Abluft aus dem Entlüftungsrohr in den Raum über die Lüftereinheit unterbindet. Üblicherweise wird die Rückschlagklappe durch den Ventilatordruck geöffnet und offengehalten. Dieses offenhalten benötigt allerdings zusätzliche Energie und verursacht Geräusche an der als Drossel wirkenden und gegebenenfalls zu Schwingungen anregbaren Rückschlagklappe. Können die Lüftereinheiten außerdem in jeder Lage montiert werden, ist zudem eine Feder zum Schließen der Klappe notwendig.

Der geförderte Volumenstrom von Lüftereinheiten ist von den Druckverlusten in Zu- und Abluftleitung abhängig. Um den Volumenstrom ohne externe Hilfsmittel konstant zu halten werden bislang bei Einrohrlüftungssystemen Einphasen-Asynchronmotoren mit Betriebskondensator und zusätzlichem Vorschaltkondensator verwendet. Nachteilig ist dabei, dass die Motorcharakteristik den Volumenstrom in Abhängigkeit der durch das Leitungsnetz vorgegeben Belastung vorgibt. Es stellt sich also ein kaum mehr beeinflussbarer Arbeitspunkt ein. Ist eine Mehrzahl an Lüftern an ein gemeinsames Entlüftungsrohr angeschlossenen, so ändert sich der Volumenstrom im Betrieb, wenn ein oder mehrere im Leitungsnetz vorhandene Lüfter ihren Betriebszustand ändern. Somit wirkt sich eine derartige Änderung auf alle anderen Lüftervolumensströme aus.

Der Erfindung liegt somit die Aufgabe zugrunde, eine Vorrichtung der eingangs geschilderten Art zu schaffen, mit der ein konstanter Volumenstrom, unabhängig vom Leitungsnetz und von den Betriebszuständen anderer gegebenenfalls im Leitungsnetz vorhandener Lüfter gewährleistet werden kann.

Die Erfindung löst die gestellte Aufgabe dadurch, dass der Druckseite der Gebläseanordnung ein Strömungssensor zugeordnet ist und dass dem Elektromotor eine Drehzahlsteuerung zugeordnet ist, welche den Elektromotor im Sinne eines Erzielens von Zielströmungssensordaten ansteuert.

Erfindungsgemäß wird also der Luftvolumenstrom mit einem integrierten Strömungssensor gemessen. Der Strömungssensor ist vorzugsweise ein Geschwindigkeitssensor und der Elektromotor insbesondere ein Drehstrom-Asynchronmotor, dem zur Drehzahlsteuerung ein Frequenzumformer zugeordnet ist. Der Strömungssensor könnte auch ein Massenstromsensor oder ein anderer geeigneter Sensor sein, dessen Messwerte eine Rückrechnung bzw. einen eindeutigen Rückschluss auf den vom Lüfter geförderten Luftvolumenstrom erlaubt. Der Motor regelt die Drehzahl, damit die geförderte Luftmenge, unabhängig von äußeren Umständen, wie etwa Druckverlusten in Zu- bzw. Abluftleitung, konstant bleibt. Die zu fördernde Luftmenge ist einstellbar, wozu der Drehzahlsteuerung vorzugsweise eine Drehzahlvorwahl zugehört. Der Strömungssensor ist vorzugsweise im Gebläsekanal angeordneten.

Der Volumenstrom wird mit dem Strömungssensor gemessen und die Motordrehzahl wird dann von der Drehzahlsteuerung soweit verändert, dass die Zielströmungssensordaten erreicht werden und der eingestellte Volumenstrom konstant bleibt. Die Steuerung kann einen etwaigen Steuerungsfehler gegebenenfalls auch auf null ausregeln, also als Regelung ausgeführt sein.

Besonders einfache und effektive Verhältnisse ergeben sich, wenn im Lüftergehäuse, insbesondere im Spiralgehäuse, ist ein Geschwindigkeitssensor vergebaut ist, welcher die Geschwindigkeit der durch die Vorrichtung geförderten Luft erfasst. Aus den Geschwindigkeitsdaten wird der geförderte Volumenstrom ermittelt. Bei einer Änderung des Volumenstroms wird die Motordrehzahl angepasst, also angehoben oder abgesenkt um den Volumenstrom konstant zu halten. Die Drehzahl des Drehstrom-Asynchronmotors wird mit Hilfe eines Frequenzumformers verändert. Damit kann bei einem System aus einer Mehrzahl an ein gemeinsames Entlüftungsrohr angeschlossenen erfindungsgemäßen Vorrichtungen sichergestellt werden, dass jeder Lüfter exakt den vorgegebenen Volumenstrom fördert.

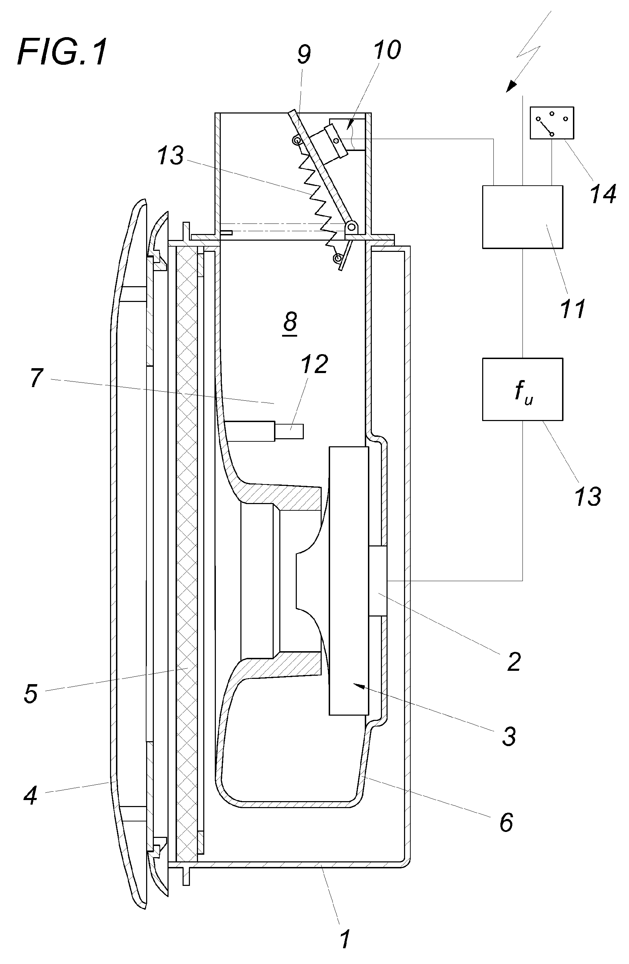

In der Zeichnung ist der Erfindungsgegenstand beispielsweise dargestellt. Es zeigen
- Fig. 1: eine erfindungsgemäße Vorrichtung im teilgeschnittenen Querschnitt und
- Fig. 2: ein Schema eins Systems aus einer Mehrzahl an ein gemeinsames Entlüftungsrohr angeschlossenen Vorrichtungen.

Die erfindungsgemäße Vorrichtung zum Lüften von Räumen umfasst ein in einem Lüftergehäuse 1, einem Spiralgehäuse, angeordnete, von einem Elektromotor 2 angetriebene Gebläseanordnung 3, im dargestellten Ausführungsbeispiel ein Radiallüfter. Das Lüftergehäuse 1 ist nach vorne hin von einem Deckel 4 abgeschlossen. Zwischen Deckel 4 und Gebläseanordnung 3 ist ein Filter 5 vorgesehen. Die Gebläseanordnung 3 läuft in einem Pumpengehäuse, einem Spiralgehäuse 6, wobei der Druckseite 7 der Gebläseanordnung 3 ein Gebläsekanal 8 zugehört, dem eine zwischen einer Verschluss- und einer Offenstellung verlagerbare Rückschlagklappe 9 zugeordnet ist. Der Rückhalteklappe 9 ist in der Offenstellung einer Festhalteeinrichtung 10 zugeordnet, welche die Rückhalteklappe 9 bei eingeschaltetem Elektromotor 2 in der Offenstellung festhält. Des Weiteren ist der der Druckseite 7 der Gebläseanordnung 3 ein Strömungssensor 12, nämlich ein Geschwindigkeitssensor oder ein Luftmassesensor, zugeordnet. Außerdem gehört dem Elektromotor 2 eine Drehzahlsteuerung 11 zu, welche den Elektromotor 2 im Sinne eines Erzielens von Zielströmungssensordaten ansteuert. Der Elektromotor 2 ist ein Drehstrom-Asynchronmotor ist, dem zur Drehzahlsteuerung ein Frequenzumformer 13 zugeordnet ist. Zur Einstellung des zu fördernden Volumenstroms gehört der Drehzahlsteuerung 11 eine Drehzahlvorwahl 14 zu.

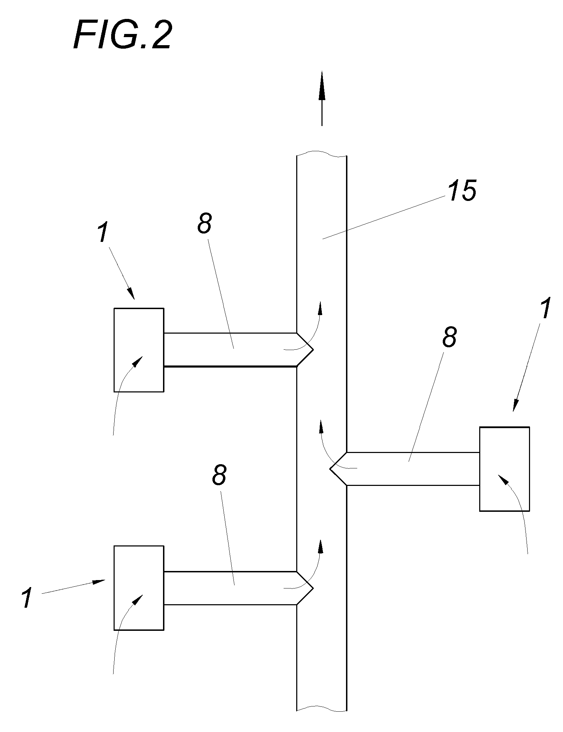

Fig. 2 zeigt ein System aus einer Mehrzahl an ein gemeinsames Entlüftungsrohr angeschlossenen erfindungsgemäßen Vorrichtungen.

## Patentansprüche

1. Vorrichtung zum Lüften von Räumen, mit einem Lüftergehäuse (1), in dem eine von einem Elektromotor (2) angetriebene Gebläseanordnung (3) angeordnet ist, wobei der Druckseite (7) der Gebläseanordnung (3) ein Gebläsekanal (8) zugehört, **dadurch gekennzeichnet, dass** der Druckseite (7) der Gebläseanordnung (3) ein Strömungssensor (12) zugeordnet ist und dass dem Elektromotor (2) eine Drehzahlsteuerung (11) zugeordnet ist, welche den Elektromotor (2) im Sinne eines Erzielens von Zielströmungssensordaten ansteuert.

2. Vorrichtung nach Anspruch 1, **dadurch gekennzeichnet, dass** der Strömungssensor (12) ein Geschwindigkeitssensor ist.

3. Vorrichtung nach Anspruch 1 oder 2, **dadurch gekennzeichnet, dass** der Elektromotor (2) ein Drehstrom-Asynchronmotor ist, dem zur Drehzahlsteuerung ein Frequenzumformer zugeordnet ist.

4. Vorrichtung nach einem der Ansprüche 1 bis 3, **dadurch gekennzeichnet, dass** der Strömungssensor (12) im Gebläsekanal (8) angeordnet ist.

5. Vorrichtung nach einem der Ansprüche 1 bis 3, **dadurch gekennzeichnet, dass** der Drehzahlsteuerung (11) eine Drehzahlvorwahl (14) zugehört.

6. System aus einer Mehrzahl an ein gemeinsames Entlüftungsrohr (15) angeschlossenen Vorrichtungen nach einem der Ansprüche 1 bis 4.
